(19) Europäisches Patentamt / European Patent Office / Office européen des brevets

(11) **EP 2 821 776 A1**

(12) **EUROPEAN PATENT APPLICATION**
published in accordance with Art. 153(4) EPC

(43) Date of publication:
**07.01.2015 Bulletin 2015/02**

(51) Int Cl.:
*G01N 21/27* (2006.01)    *G01N 21/03* (2006.01)

(21) Application number: **13755435.8**

(22) Date of filing: **26.02.2013**

(86) International application number:
**PCT/JP2013/054909**

(87) International publication number:
**WO 2013/129379 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.02.2012 JP 2012043470**

(71) Applicant: **Nitto Denko Corporation**
**Ibaraki-shi, Osaka 567-8680 (JP)**

(72) Inventor: **KONTANI, Tomohiro**
**Ibaraki-shi**
**Osaka 567-8680 (JP)**

(74) Representative: **Alt, Michael**
**Bird & Bird LLP**
**Maximiliansplatz 22**
**80333 München (DE)**

(54) **SPR SENSOR CELL, AND SPR SENSOR**

(57)    The present invention provides an SPR sensor cell having very excellent detection sensitivity and an SPR sensor. The SPR sensor cell of the present invention includes a detection unit and a sample mounting portion adjacent to the detection unit, wherein: the detection unit includes an under-cladding layer, a core layer formed so that at least a part of the core layer is adjacent to the under-cladding layer, a metal layer covering the core layer, and a protective layer formed between the core layer and the metal layer; and the protective layer is formed of a material having a band gap (Eg) of more than 1.0 eV and less than 7.0 eV.

Fig.1

EP 2 821 776 A1

**Description**

Technical Field

The present invention relates to an SPR sensor cell and an SPR sensor. More specifically, the present invention relates to an SPR sensor cell including an optical waveguide and an SPR sensor.

Background Art

Hitherto, in the fields of chemical analysis, biochemical analysis, and the like, a surface plasmon resonance (SPR) sensor including an optical fiber has been used. In the SPR sensor including an optical fiber, a metal thin film is formed on an outer circumferential surface of a tip end portion of the optical fiber, and an analysis sample is fixed to the optical fiber into which light is guided. Among the light to be guided, light having a particular wavelength generates surface plasmon resonance in the metal thin film, and light intensity thereof is attenuated. In such an SPR sensor, the wavelength of the light generating surface plasmon resonance generally varies depending on a refractive index or the like of an analysis sample to be fixed to the optical fiber. Therefore, if a wavelength at which light intensity is attenuated after the generation of surface plasmon resonance is measured, the wavelength of the light generating surface plasmon resonance can be identified. Further, if a change in the wavelength at which light intensity is attenuated is detected, it can be confirmed that the wavelength of the light generating surface plasmon resonance has changed, and hence a change in refractive index of the analysis sample can be confirmed. As a result, such an SPR sensor can be used for various chemical analyses and biochemical analyses such as measurement of a sample concentration and detection of an immunoreaction.

For example, in the case where the sample is a solution, the refractive index of the sample (solution) depends on a concentration of the solution. Therefore, the concentration of the sample can be detected by measuring the refractive index of the sample (solution) in the SPR sensor in which the sample (solution) is in contact with the metal thin film, and further, it can be confirmed that the concentration of the sample (solution) has changed by confirming a change in the refractive index. In analysis of the immunoreaction, for example, an antibody is fixed onto the metal thin film of the optical fiber in the SPR sensor through intermediation of a dielectric film, an analyte is brought into contact with the antibody, and surface plasmon resonance is generated. In this case, if the antibody and the analyte perform the immunoreaction, the refractive index of the sample changes. Therefore, it can be determined that the antibody and the analyte have performed the immunoreaction by confirming that the refractive index of the sample has changed before and after the contact between the antibody and the analyte.

In the SPR sensor including an optical fiber, the tip end portion of the optical fiber has a fine cylindrical shape, and hence there is a problem in that it is difficult to form the metal thin film and fix an analysis sample to the optical fiber. In order to solve the problem, for example, there has been proposed an SPR sensor cell including a core through which light is transmitted and a clad covering the core, in which a through-hole extending to a surface of the core is formed at a predetermined position of the clad, and a metal thin film is formed on the surface of the core at a position corresponding to the through-hole (for example, Patent Literature 1). In such an SPR sensor cell, it is easy to form the metal thin film for generating surface plasmon resonance on the surface of the core and fix the analysis sample onto the surface.

However, in recent years, in chemical analysis and biochemical analysis, there is an increasing demand for detection of a minute change and/or a trace amount of component, and thus further enhancement of detection sensitivity of the SPR sensor cell is being demanded.

Citation List

Patent Literature

[PTL 1] JP 2000-19100 A

Summary of Invention

Technical Problem

The present invention has been made in view of solving the conventional problem, and an object of the present invention is to provide an SPR sensor cell having very excellent detection sensitivity and an SPR sensor.

Solution to Problem

According to one embodiment of the present invention, there is provided an SPR sensor cell. The SPR sensor cell includes: a detection unit; and a sample mounting portion adjacent to the detection unit, in which: the detection unit includes an under-cladding layer, a core layer formed so that at least a part of the core layer is adjacent to the under-cladding layer, a metal layer covering the core layer, and a protective layer formed between the core layer and the metal layer; and the protective layer is formed of a material having a band gap (Eg) of more than 1.0 eV and less than 7.0 eV.

According to a preferred embodiment, a refractive index of the protective layer is higher than a refractive index of the core layer.

According to a preferred embodiment, the material for forming the protective layer includes at least one member selected from silicon, zinc selenide, gallium arsenide, aluminum nitride, and N,N'-di(1-naphthyl)-N,N'-diphenylbenzidine.

According to a preferred embodiment, the refractive index of the protective layer is 1.60 or more.

According to a preferred embodiment, the protective layer has an extinction coefficient of $1.80 \times 10^{12}$ or less.

According to a preferred embodiment, the protective layer has a thickness of from 5 nm to 200 nm.

According to a preferred embodiment, the core layer is buried in the under-cladding layer so that an upper surface of the core layer is exposed; and the protective layer is formed so as to cover a part of each of an upper surface of the under-cladding layer and the upper surface of the core layer, the part being adjacent to the sample mounting portion.

According to another embodiment the present invention, there is provided an SPR sensor. The SPR sensor includes the SPR sensor cell described above.

Advantageous Effects of Invention

According to one embodiment of the present invention, the SPR sensor cell having extremely excellent detection sensitivity and the SPR sensor can be provided by forming the protective layer formed of a material having a specified band gap between the core layer and the metal layer covering the core layer. The reason why such effect is achieved is not exactly known, but is assumed as described below. That is, in a related-art SPR sensor cell using an optical waveguide, in terms of determinants of the wavelength of light for exciting surface plasmon resonance (specifically, the refractive index or dielectric constant of a sample, the refractive index or dielectric constant of a metal layer, the refractive index or dielectric constant of a core layer, and the angle of reflection of light), as a method of improving detection sensitivity, there is a proposal of, for example, causing the angle of propagation in the optical waveguide to be equal to the angle of reflection in the excitation of surface plasmon resonance. In contrast, it is assumed that, in the present invention, excitation conditions for surface plasmon resonance are made suitable because the formation of the protective layer formed of a material having a specified band gap between the core layer and the metal layer reduces the angle of incidence of transmitted light at an interface between the core layer and the protective layer, and as a result, the angle of reflection at the metal layer becomes smaller than that in the related art. As described above, according to the one embodiment of the present invention, the detection sensitivity of the SPR sensor cell can be improved on the basis of a completely different technical concept from that of the related art.

Brief Description of Drawings

FIG. **1 (a)** is a schematic perspective view illustrating an SPR sensor cell according to one embodiment of the present invention, and FIG. **1 (b)** is an A-A sectional view of the SPR sensor cell illustrated in FIG. **1(a)**.

FIG. 2 **(a)** is a schematic perspective view illustrating an SPR sensor cell according to another embodiment of the present invention, and FIG. **2(b)** is a B-B sectional view of the SPR sensor cell illustrated in FIG. **2(a).**

FIGS. **3** are schematic sectional views illustrating an example of a method of producing an SPR sensor cell of the present invention.

FIG. **4** is a schematic sectional view illustrating an SPR sensor according to a preferred embodiment of the present invention.

Description of Embodiments

A. SPR sensor cell

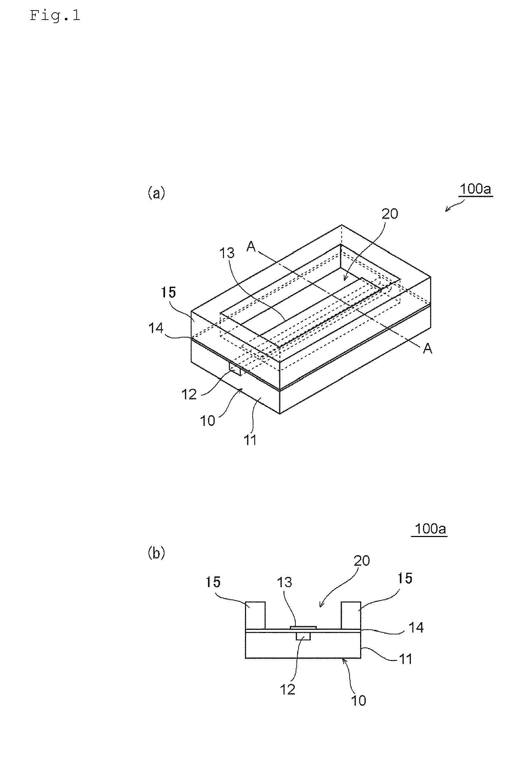

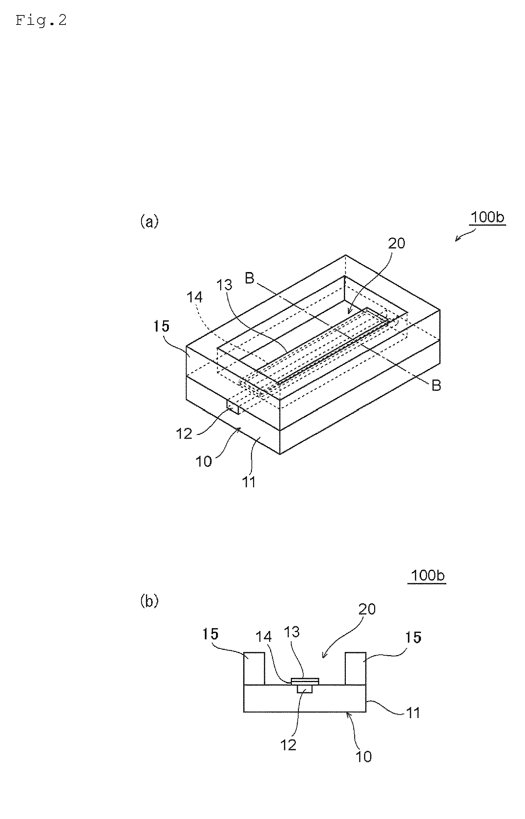

FIG. **1 (a)** is a schematic perspective view illustrating an SPR sensor cell according to one embodiment of the present invention, and FIG. **1 (b)** is an A-A sectional view of the SPR sensor cell. In addition, FIG. **2(a)** is a schematic perspective view illustrating an SPR sensor cell according to another embodiment of the present invention, and FIG. **2(b)** is a B-B sectional view of the SPR sensor cell. It should be noted that, when a direction is mentioned in the following description of the SPR sensor cell, an upper side of the figure is defined as an upper side, and a lower side of the figure is defined as a lower side.

As illustrated in the figures, SPR sensor cells **100a** and **100b** are each formed in a shape of a bottomed frame having a substantially rectangular shape in a plan view, and includes a detection unit **10** and a sample mounting portion **20** adjacent to the detection unit **10**. The detection unit **10** is provided so as to detect the state of a sample to be mounted in the sample mounting portion **20** and/or a change therein. The detection unit **10** includes an optical waveguide. In the illustrated embodiment, the detection unit **10** is substantially formed of the optical waveguide. Specifically, the detection unit **10** includes an under-cladding layer **11,** a core layer **12** formed so that at least a part thereof is adjacent to the under-cladding layer **11,** a metal layer **13** covering the core layer **12,** and a protective layer **14** formed between the core layer **12** and the metal layer **13**. The sample mounting portion **20** is defined by an over-cladding layer **15**. The over-cladding layer **15** may also be omitted as long as the sample mounting portion **20** can be provided appropriately. In the sample mounting portion **20,** a sample (for example, a solution or powder) to be analyzed is mounted so as to come into contact with the detection unit (substantially, the metal layer).

The under-cladding layer **11** is formed in a shape of a plate having a substantially rectangular shape in a plan view, with a predetermined thickness. The thickness of the under-cladding layer (thickness from an upper surface of the core layer) is, for example, from 5 $\mu$m to 400 $\mu$m.

The core layer **12** is formed substantially in a square column shape (more specifically, a rectangular shape in a cross-section flattened in a width direction) extending in a direction orthogonal to both a width direction (right and left direction of the figure surface of each of FIG. **1 (b)** and FIG. **2(b)**) and a thickness direction of the under-cladding layer **11,** and is buried in an upper end portion substantially at the center of the width direction of the under-cladding layer **11.** The direction in which the core layer **12** extends serves as a direction in which light is propagated in the optical waveguide. The thickness of the core layer is, for example, from 5 $\mu$m to 200 $\mu$m, and the width of the core layer is, for example, from 5 $\mu$m to 200 $\mu$m.

The core layer **12** is disposed so that the upper surface thereof is exposed from the under-cladding layer **11.** The core layer **12** is preferably disposed so that the upper surface thereof is flush with an upper surface of the under-cladding layer **11.** The metal layer **13** can be disposed efficiently only on an upper side of the core layer **12** by disposing the core layer so that the upper surface thereof is flush with the upper surface of the under-cladding layer. Further, the core layer **12** is disposed so that both end surfaces thereof in the extending direction are flush with both end surfaces of the under-cladding layer in the extending direction.

The refractive index of the core layer **12** is preferably 1.33 or more. When the refractive index of the core layer is 1.33 or more, surface plasmon resonance can be excited even in an aqueous solution-based sample (refractive index of water: 1.33), and a generally used material can be used. In addition, the refractive index of the core layer is preferably lower than the refractive index of the protective layer to be described later. When the refractive index of the core layer is set to be lower than the refractive index of the protective layer, excitation conditions for surface plasmon resonance become satisfactory, and as a result, detection sensitivity can be markedly improved. It should be noted that the term "refractive index" as used herein refers to a refractive index at a wavelength of 850 nm unless otherwise specified.

The refractive index of the core layer **12** is higher than that of the under-cladding layer **11.** The difference between the refractive index of the core layer and that of the under-cladding layer is preferably 0.010 or more, more preferably 0.020 or more. When the difference between the refractive index of the core layer and that of the under-cladding layer falls within such a range, the optical waveguide of the detection unit can be set to a so-called multimode. Thus, the amount of light transmitted through the optical waveguide can be increased, and as a result, the signal-to-noise (S/N) ratio can be enhanced.

As a material for forming the core layer **12,** any suitable material can be used as long as the effects of the present invention are obtained. Specific examples thereof include a fluorine resin, an epoxy resin, a polyimide resin, a polyamide resin, a silicone resin, an acrylic resin, and modified products thereof (for example, a fluorene-modified product, a deuterium-modified product, and a fluorine-modified product in the case of the resins other than the fluorine resin). Those resins may be used alone or in combination. Those resins each can be used as a photosensitive material preferably by being blended with a photosensitizing agent. The under-cladding layer **11** can be formed of a material that is similar to that for forming the core layer and is adjusted so that the refractive index thereof becomes lower than that of the core layer.

As illustrated in FIGS. **1** and **2**, the metal layer **13** is formed so as to uniformly cover the upper surface of the core layer **12** through intermediation of the protective layer **14**. In this case, as necessary, an easy-adhesion layer (not shown) may be formed between the protective layer and the metal layer. By forming the easy-adhesion layer, the protective layer and the metal layer can be fixed to each other firmly.

As a material for forming the metal layer **13**, gold, silver, platinum, copper, aluminum, and alloys thereof may be utilized. The metal layer may be a single layer or may have a laminate structure of two or more layers. The thickness (total thickness of all the layers in the case of the laminate structure) of the metal layer is preferably from 40 nm to 70 nm, more preferably from 50 nm to 60 nm.

As a material for forming the easy-adhesion layer, chromium or titanium may typically be utilized. The thickness of the easy-adhesion layer is preferably from 1 nm to 5 nm.

The protective layer **14** is formed between the core layer **12** and the metal layer **13**. The shape of the protective layer **14** is not limited as long as a part of the core layer **12** to be covered with the metal layer **13** can be covered. For example, as illustrated in FIGS. **2(a)** and **2(b)**, the protective layer **14** may be formed as a thin film having the same shape as the metal layer **13** in a plan view. It is preferred that the protective layer **14** be formed so as to cover also other surfaces of the optical waveguide, such as a part of the upper surface of each of the under-cladding layer **11** and the core layer **12**, the part being adjacent to the sample mounting portion **20** (that is, a part with which a mounted sample is brought into contact). When the protective layer is formed in this manner, for example, in the case where the sample is liquid, the core layer and/or the under-cladding layer can be prevented from swelling with the sample, and as a result, light can be stably guided. In one embodiment, for example, as illustrated in FIGS. **1(a)** and **1(b)**, the protective layer **14** may be formed as a thin film having the same shape as the under-cladding layer in a plan view so as to completely cover the upper surface of each of the under-cladding layer **11** and the core layer **12.**

The protective layer **14** is formed of a material having a band gap (Eg) of more than 1.0 eV and less than 7.0 eV, and is formed of a material having a band gap (Eg) of preferably more than 1.0 eV and less than 5.5 eV, more preferably more than 1.0 eV and less than 3.5 eV. When the protective layer is formed of such a material, the refractive index of the protective layer can be made sufficiently high, and its extinction coefficient can be made sufficiently small. As a result, an excellent SIN ratio and detection sensitivity can be obtained. The band gap (Eg) can be determined by, for example, measuring an optical absorption spectrum through the use of a spectroscopic method. It should be noted that, in this description, the band gap (Eg) is a value at 27°C.

The material for forming the protective layer **14** is not limited as long as the material has a band gap in the above-mentioned range. For example, there may be used an inorganic semiconductor material, an organic semiconductor material, or an extrinsic semiconductor material thereof . Specific examples of the inorganic semiconductor material include element semiconductors such as silicon and carbon and compound semiconductors such as zinc selenide, gallium arsenide, and aluminum nitride. In addition, specific examples of the organic semiconductor material include low molecular weight materials such as an arylamine derivative (e.g., N,N'-di(1-naphthyl)-N,N'-diphenylbenzidine) and a quinolinol metal complex; and high molecular weight materials such as polyacetylene and polyaniline. Examples of the extrinsic semiconductor material include semiconductor materials each obtained by adding a dopant to any of the inorganic semiconductor materials or the organic semiconductor materials. The kind and addition amount of the dopant may be appropriately set depending on a desired band gap and the like. In one embodiment, as the material for forming the protective layer, silicon, zinc selenide, gallium arsenide, aluminum nitride, and N,N'-di(1-naphthyl)-N,N'-diphenylbenzidine (hereinafter sometimes referred to as "NPD") may preferably be used. This is because a protective layer having an appropriate refractive index and extinction coefficient can be formed. The protective layer may be a single layer, or may have a laminate structure of two or more layers.

The refractive index of the protective layer **14** is typically higher than the refractive index of the core layer **12**. With this, the angle of incidence of transmitted light at an interface between the core layer and the protective layer can be reduced, and as a result, the angle of reflection at the metal layer is also reduced. Consequently, excitation conditions for surface plasmon resonance can be made more suitable.

Specifically, the refractive index of the protective layer **14** is preferably 1.60 or more, more preferably 2.00 or more, still more preferably 2.50 or more. When the refractive index of the protective layer is less than 1.60, sufficient detection sensitivity may not be obtained.

The extinction coefficient of the protective layer **14** is preferably $1.80 \times 10^{-2}$ or less, more preferably $1.50 \times 10^{-2}$ or less. The lower limit of the extinction coefficient is preferably 0 (zero) . When the extinction coefficient falls within such a range, a reduction in the intensity of light during transmission through the protective layer can be suppressed, resulting in an improvement in the S/N ratio, and hence an SPR peak can be satisfactorily expressed.

The thickness of the protective layer **14** (total thickness of all layers in the case of having a laminate structure) is preferably from 5 nm to 200 nm, more preferably from 5 nm to 100 nm. With such thickness, surface plasmon resonance can be caused to occur with a sufficient intensity, and as a result, detection sensitivity can be sufficiently improved.

As illustrated in FIGS. **1** and **2**, the over-cladding layer **15** is formed in the shape of a frame having a rectangular shape in a plan view so that an outer circumference of the over-cladding layer **15** becomes substantially flush with an outer circumference of the under-cladding layer **11** in a plan view, on the upper surface of each of the under-cladding layer **11** and the core layer **12** (upper surface of the protective layer **14** in FIGS. **1**) A portion surrounded by the upper surfaces of the under-cladding layer **11** and the core layer **12** (upper surface of the protective layer **14** in FIGS. **1**) and the over-cladding layer **15** is partitioned as the sample mounting portion **20**. By mounting a sample in the partitioned portion, the metal layer of the detection unit **10** and the sample come into contact with each other so that detection can be performed. Further, by forming such a partitioned portion, a sample can be easily mounted on the surface of the metal layer, and hence the operability can be enhanced.

As a material for forming the over-cladding layer **15**, for example, the materials for forming the core layer and the under-cladding layer, and silicone rubber may be utilized. The thickness of the over-cladding layer is preferably from 5 $\mu$m to 2,000 $\mu$m, more preferably from 25 $\mu$m to 200 $\mu$m. The refractive index of the over-cladding layer is preferably lower than the refractive index of the core layer. In one embodiment, the refractive index of the over-cladding layer is equal to the refractive index of the under-cladding layer.

Although the SPR sensor cell according to the preferred embodiment of the present invention has been described, the present invention is not limited thereto. For example, in the relationship between the core layer and the under-cladding layer, the core layer has only to be formed so that at least a part thereof is adjacent to the under-cladding layer. For example, although a configuration in which the core layer is buried in the under-cladding layer is described in the above-mentioned embodiment, the core layer may be formed so as to pass through the under-cladding layer. Alternatively, the core layer may be formed on the under-cladding layer so that a predetermined portion of the core layer is surrounded by the over-cladding layer.

Further, the number of core layers in the SPR sensor may be changed depending on the purpose. Specifically, a plurality of the core layers may be formed at a predetermined interval in the width direction of the under-cladding layer. With such a configuration, a plurality of samples can be analyzed simultaneously, and hence analysis efficiency can be enhanced. As the shape of the core layer, any suitable shape (for example, a semicircular column shape or a convex column shape) can be adopted depending on the purpose.

Further, a lid may be provided on an upper portion of the SPR sensor cell **100** (sample mounting portion **20**). With such a configuration, a sample can be prevented from coming into contact with ambient air. In addition, in the case where the sample is a solution, a change in concentration caused by evaporation of a solvent can be prevented. In the case of providing a lid, an injection port for injecting a liquid sample into the sample mounting portion and a discharge port for discharging the liquid sample from the sample mounting portion may be provided. With such a configuration, the sample can be allowed to flow and to be supplied to the sample mounting portion continuously, and hence the characteristics of the sample can be measured continuously.

The above-mentioned embodiments may be combined appropriately.

B. Method of producing SPR sensor cell

The SPR sensor cell of the present invention can be produced by any suitable method. As an example, a method of producing an SPR sensor cell adopting a stamper system as a method of forming a core layer on an under-cladding layer is described. As the method of forming a core layer on an under-cladding layer, for example, photolithography (direct exposure system) using a mask as well as the stamper system may be utilized. It should be noted that the photolithography is well known.

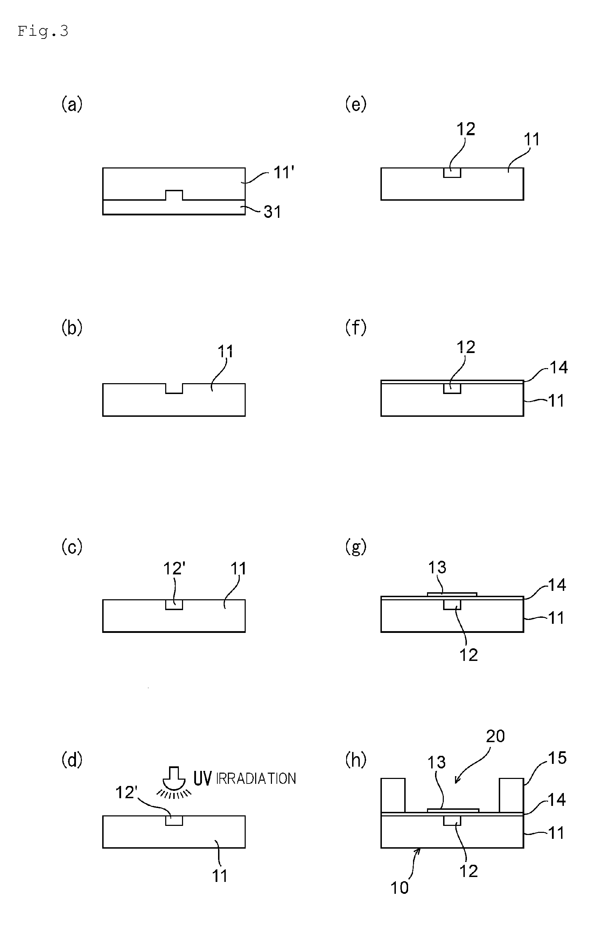

FIGS. **3(a)** to **3(h)** are schematic sectional views illustrating the method of producing an SPR sensor cell adopting a stamper system as a method of forming a core layer on an under-cladding layer. First, as illustrated inFIG. **3(a)**, a material **11'** for forming an under-cladding layer is applied to a die **31** having a protrusion corresponding to a core layer formation portion of the under-cladding layer, and the material for forming an under-cladding layer applied to the die is irradiated with ultraviolet rays to cure the material. The irradiation conditions of ultraviolet rays can be set appropriately depending on the kind of the material for forming an under-cladding layer. The under-cladding layer **11** is formed by curing the material for forming an under-cladding layer. Further, as illustrated in FIG. **3(b)**, the under-cladding layer **11** thus formed is peeled from the die.

Then, as illustrated in FIG. **3(c)**, a groove portion of the under-cladding layer **11** is filled with a material **12'** for forming a core layer. Further, of the material for forming a core layer filling the groove portion of the under-cladding layer, an excess material for forming a core layer running off the concave groove is scraped with a scraper in accordance with a method of producing a polymer optical waveguide described in JP 09-281351 A. Thus, the core layer and the under-cladding layer can be rendered flush with each other. Further, as illustrated in FIG. **3(d)**, the material **12'** for forming a core layer filling the groove portion is irradiated with ultraviolet rays to be cured. The irradiation conditions of ultraviolet rays can be set appropriately depending on the kind of the material for forming a core layer. As necessary, the material for forming a core layer may be heated. The heating may be performed before or after the irradiation with ultraviolet rays, or simultaneously with the irradiation with ultraviolet rays. The heating conditions can be set appropriately depending on the kind of the material for forming a core layer. By curing the material for forming a core layer, as illustrated in FIG.

3(e), the core layer **12** buried in the under-cladding layer **11** is formed.

Next, as illustrated in FIG. **3(f)**, the protective layer **14** is formed on the under-cladding layer **11** and the core layer **12**. The protective layer is formed, for example, by subjecting a material for forming a protective layer to sputtering or vapor deposition. The protective layer **14** may be formed in a different way from the illustrated example so as to cover only a part, which is to be covered with the metal layer in a subsequent step, in the upper surface of each of the under-cladding layer **11** and the core layer **12**. In this case, the protective layer can be formed by subjecting a material for forming a protective layer to sputtering or vapor deposition through a mask having a predetermined pattern. An easy-adhesion layer (not shown) is preferably formed on the protective layer. The easy-adhesion layer is formed, for example, by subjecting chromium or titanium to sputtering.

Next, as illustrated in FIG. **3(g)**, the metal layer **13** is formed on the protective layer **14** so as to cover the core layer **12**. Specifically, the metal layer **13** is formed, for example, by subjecting a material for forming a metal layer to vacuum deposition, ion plating, or sputtering through a mask having a predetermined pattern.

Finally, as illustrated in FIG. **3(h)**, the over-cladding layer **15** having the predetermined frame shape is formed. The over-cladding layer **15** can be formed by any suitable method. The over-cladding layer **15** can be formed, for example, by disposing a die having the predetermined frame shape on the protective layer **14**, filling the die with varnish of a material for forming an over-cladding layer, drying the varnish, curing the varnish as necessary, and finally removing the die. In the case of using a photosensitive material, the over-cladding layer **15** can be formed by applying the varnish over the entire surface of the protective layer **14**, drying the varnish, and then exposing the varnish to light through a photomask having a predetermined pattern, followed by development.

Accordingly, the SPR sensor cell can be produced by the method described above.

C. SPR sensor

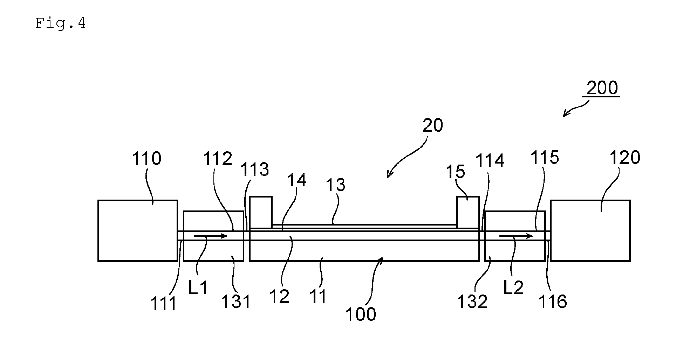

FIG. **4** is a schematic sectional view illustrating an SPR sensor according to a preferred embodiment of the present invention. An SPR sensor **200** includes the SPR sensor cell **100**, a light source **110**, and an optical measuring instrument **120**. The SPR sensor cell **100** is the SPR sensor cell of the present invention described in the above-mentioned sections A and B.

As the light source **110**, any suitable light source can be adopted. Specific examples of the light source include a white light source and a monochromatic light source . The optical measuring instrument **120** is connected to any suitable arithmetic processing device, and enables accumulation, display, and processing of data.

The light source **110** is connected to a light source side optical fiber **112** through a light source side optical connector **111**. The light source side optical fiber **112** is connected to one side end portion in a propagation direction of the SPR sensor cell **100** (core layer **12**) through a light source side fiber block **113**. A measuring instrument side optical fiber **115** is connected to the other side end portion in the propagation direction of the SPR sensor cell **100** (core layer **12**) through a measuring instrument side fiber block **114**. The measuring instrument side optical fiber **115** is connected to the optical measuring instrument **120** through a measuring instrument side optical connector **116**.

The SPR sensor cell **100** is fixed by any suitable sensor cell fixing device (not shown). The sensor cell fixing device is movable in a predetermined direction (for example, a width direction of the SPR sensor cell), and thus the SPR sensor cell can be disposed at a desired position.

The light source side optical fiber **112** is fixed by a light source side optical fiber fixing device **131**, and the measuring instrument side optical fiber **115** is fixed by a measuring instrument side optical fiber fixing device **132**. The light source side optical fiber fixing device **131** and the measuring instrument side optical fiber fixing device **132** are each fixed to any suitable six-axis movable stage (not shown) so as to be movable in the propagation direction of the optical fiber, width direction (direction orthogonal to the propagation direction in a horizontal direction) and thickness direction (direction orthogonal to the propagation direction in a perpendicular direction), and rotable about axes in the above-mentioned respective directions.

In the SPR sensor as described above, the light source **110**, the light source side optical fiber **112**, the SPR sensor cell **100** (core layer **12**), the measuring instrument side optical fiber **115**, and the optical measuring instrument **120** can be arranged on one axis, and light can be guided from the light source **110** so as to be transmitted therethrough.

An example of the manner of use of such an SPR sensor is described below.

First, a sample is mounted on the sample mounting portion **20** of the SPR sensor cell **100** so that the sample and the metal layer **13** are brought into contact with each other. Then, predetermined light from the light source **110** is guided to the SPR sensor cell **100** (core layer **12**) through the light source side optical fiber **112** (see an arrow L1 of FIG. **4**). The light guided to the SPR sensor cell **100** (core layer **12**) is transmitted through the SPR sensor cell **100** (core layer **12**) while repeating total internal reflection in the core layer **12**, and part of the light enters the metal layer **13** on an upper surface of the core layer **12** and is attenuated by surface plasmon resonance. The light transmitted through the SPR sensor cell **100** (core layer **12**) is guided to the optical measuring instrument **120** through the measuring instrument side optical fiber **115** (see an arrow L2 of FIG. **4**). That is, in the SPR sensor **200**, the intensity of light having a wavelength generating surface plasmon resonance in the core layer **12** is attenuated in the light guided to the optical measuring instrument **120**. The wavelength of light generating surface plasmon resonance depends on, for example, the refractive index of the sample brought into contact with the metal layer **13**. Therefore, by detecting the attenuation of the light intensity of the light guided to the optical measuring instrument **120**, a change in refractive index of the sample can be detected.

For example, in the case of using a white light source as the light source **110**, a change in refractive index of the sample can be confirmed by measuring the wavelength of light whose light intensity is attenuated after the transmission through the SPR sensor cell **100** (wavelength of light generating surface plasmon resonance) with the optical measuring instrument **120** and detecting a change in wavelength of the light whose light intensity is attenuated. In addition, for example, in the case of using a monochromatic light source as the light source **110**, a change in wavelength of light generating surface plasmon resonance can be confirmed and a change in refractive index of the sample can be confirmed by measuring a change (attenuation degree) in light intensity of monochromatic light after the transmission through the SPR sensor cell **100** with the optical measuring instrument **120** and detecting a change in attenuation degree.

As described above, such an SPR sensor cell can be used, for example, for various chemical analyses and biochemical analyses such as the measurement of a sample concentration and the detection of an immunoreaction, based on a change in refractive index of the sample. More specifically, for example, in the case where the sample is a solution, the refractive index of the sample (solution) depends on the concentration of the solution, and hence the concentration of the sample can be measured by detecting the refractive index of the sample. Further, a change in concentration of the sample can be confirmed by detecting a change in refractive index of the sample. In addition, for example, in the detection of an immunoreaction, an antibody is fixed onto the metal layer **13** of the SPR sensor cell **100** through an intermediate dielectric film, and an analyte is brought into contact with the antibody. If the antibody and the analyte perform an immunoreaction, the refractive index of the sample changes. Therefore, it can be determined that the antibody and the analyte have performed an immunoreaction by detecting a change in refractive index of the sample before and after the contact between the antibody and the analyte.

Examples

The present invention is hereinafter described specifically by way of Examples. However, the present invention is not limited to Examples below. It should be noted that, unless otherwise specified, a measurement wavelength for a refractive index is 850 nm and a measurement wavelength for each of an absorption coefficient and an extinction coefficient is 1,200 nm in the Examples and the Comparative Examples.

<Example 1>

An optical waveguide was formed through use of the stamper system as illustrated in FIGS. **3 (a)** to **3(e)**. Specifically, a fluorine-based UV curable resin ("OP38Z" (trade name) manufactured by DIC Corporation), which was a material for forming an under-cladding layer was applied to a die having a protrusion corresponding to a core layer formation portion of an under-cladding layer, and the resin was cured with ultraviolet rays to form an under-cladding layer. The refractive index of the under-cladding layer thus obtained was 1.372. The under-cladding layer had a length of 80 mm, a width of 80 mm, and a thickness of 150 $\mu$m, and a groove portion for forming a core layer having a width of 50 $\mu$m and a thickness (depth) of 50 $\mu$m was formed in the under-cladding layer. After the under-cladding layer was peeled from the die, the groove portion was filled with a fluorine-based UV curable resin ("OP40Z" (trade name) manufactured by DIC Corporation), which was a material for forming a core layer, to form a core layer. The refractive index of the core layer thus formed was 1.399, and the absorption coefficient thereof was $2.90 \times 10^{-2}$ (mm$^{-1}$). It should be noted that the refractive index was measured by forming a film of the material for forming a core layer or material for forming an under-cladding layer having a thickness of 10 $\mu$m on a silicon wafer and measuring the refractive index of the film at a wavelength of 850 nm through use of a prism coupler refractive index measurement device. The absorption coefficient was measured by forming a film of the material for forming a core layer having a thickness of 50 $\mu$m on a glass substrate and measuring the absorption coefficient of the film at a wavelength of 1,200 nm through use of a spectrophotometer. As described above, a buried-type optical waveguide film was produced.

Then, Si was sputtered onto the entire surface of an upper surface (core layer exposed surface) of the optical waveguide film thus obtained to form a protective layer (thickness: 20 nm). The optical waveguide film with the protective layer formed thereon was subjected to dice cutting to a length of 20 mm and a width of 20 mm. After that, gold was sputtered through a mask with an opening having a length of 6 mm and a width of 1 mm, and thus a metal layer (thickness: 50 nm) was formed so as to cover the core layer through the intermediate protective layer. Finally, a die having a frame shape was disposed on the protective layer, and the die was filled with the same material as the material for forming the under-cladding layer, followed by curing with UV light and the removal of the die, to thereby form a frame-shaped over-cladding layer. Thus, an SPR sensor cell as illustrated in FIGS. **1** was produced.

The SPR sensor cell obtained as described above, a halogen light source ("HL-2000-HP" (trade name) manufactured by Ocean Optics, Inc.), and a spectroscope ("USB4000" (trade name) manufactured by Ocean Optics, Inc.) were arranged on one axis and connected to each other to produce an SPR sensor as illustrated in FIG. **4**. 40 µL of each of 5 kinds of ethylene glycol aqueous solutions of different concentrations (concentration: 1 vol% (refractive index: 1.334), 5 vol% (refractive index: 1.33827), 10 vol% (refractive index: 1.3436), 20 vol% (refractive index: 1.35459), and 30 vol% (refractive index: 1.36527)) were loaded into the sample mounting portion of the SPR sensor cell and subjected to measurement. Further, a transmittance spectrum was determined in the case where light intensity at each wavelength when light was transmitted through the SPR sensor cell (optical waveguide) under the condition that the sample (ethylene glycol aqueous solution) was not mounted was set to 100%, and a wavelength λmin corresponding to a minimum value of a transmittance was measured. A relationship between the refractive index of the ethylene glycol aqueous solution and the λmin was plotted on XY coordinates with the X axis representing the refractive index and the Y axis representing λmin to create a calibration line, and a gradient of the calibration line was determined. A larger gradient means higher detection sensitivity. Table 1 shows the result.

In addition, 40 µL of water were loaded into the sample mounting portion of the same SPR sensor as that in the foregoing, and immediately after that, the transmittance of light having a wavelength of 750 nm was measured. After 10 minutes from the loading of water, the transmittance of light having a wavelength of 750 nm was measured again, and the amount of change in transmittance between the transmittance immediately after loading and the transmittance after 10 minutes was calculated on the basis of the following equation. Table 1 shows the result.

$$\text{Amount of change in transmittance (\%)} = (\text{transmittance immediately after loading} - \text{transmittance after 10 minutes}) / \text{transmittance immediately after loading} \times 100$$

<Example 2>

An SPR sensor cell and an SPR sensor were produced in the same way as in Example 1 except for forming a ZnSe layer (thickness: 20 nm) as the protective layer. The SPR sensor thus obtained was evaluated in the same way as in Example 1. Table 1 shows the results.

<Example 3>

An SPR sensor cell and an SPR sensor were produced in the same way as in Example 1 except for forming an NPD layer (thickness: 20 nm) as the protective layer. The SPR sensor thus obtained was evaluated in the same way as in Example 1. Table 1 shows the results.

<Example 4>

An SPR sensor cell and an SPR sensor were produced in the same way as in Example 1 except for forming a GaAs layer (thickness: 20 nm) as the protective layer. The SPR sensor thus obtained was evaluated in the same way as in Example 1. Table 1 shows the results.

<Example 5>

An SPR sensor cell and an SPR sensor were produced in the same way as in Example 1 except for forming an AlN layer (thickness: 20 nm) as the protective layer. The SPR sensor thus obtained was evaluated in the same way as in Example 1. Table 1 shows the results.

<Example 6>

A buried-type optical waveguide film including a core layer and an under-cladding layer was produced in the same way as in Example 1. The optical waveguide film was subjected to dice cutting to a length of 20 mm and a width of 20 mm. After that, Si and gold were sputtered in the stated order onto the exposed surface of the core layer through a mask having an opening having a length of 6 mm and a width of 1 mm, and thus a protective layer (thickness: 20 nm) and a metal layer (thickness: 50 nm) were formed in the stated order so as to cover the core layer. Finally, a die having a frame shape was disposed on the under-cladding layer and the core layer, and the die was filled with the same material as the material for forming the under-cladding layer, followed by curing with UV light and the removal of the die, to thereby form a frame-shaped over-cladding layer. Thus, an SPR sensor cell as illustrated in FIGS . **2** was produced. An SPR sensor was produced in the same way as in Example 1 except for using the obtained SPR sensor cell, and was evaluated in the same way as in Example 1. Table 1 shows the results.

<Example 7>

An SPR sensor cell and an SPR sensor were produced in the same way as in Example 6 except for forming a ZnSe layer (thickness: 20 nm) as the protective layer. The SPR sensor thus obtained was evaluated in the same way as in Example 1. Table 1 shows the results.

<Example 8>

An SPR sensor cell and an SPR sensor were produced in the same way as in Example 6 except for forming an NPD layer (thickness: 20 nm) as the protective layer. The SPR sensor thus obtained was evaluated in the same way as in Example 1. Table 1 shows the results.

<Example 9>

An SPR sensor cell and an SPR sensor were produced in the same way as in Example 6 except for forming a GaAs layer (thickness: 20 nm) as the protective layer. The SPR sensor thus obtained was evaluated in the same way as in Example 1. Table 1 shows the results.

<Example 10>

An SPR sensor cell and an SPR sensor were produced in the same way as in Example 6 except for forming an AIN layer (thickness: 20 nm) as the protective layer. The SPR sensor thus obtained was evaluated in the same way as in Example 1. Table 1 shows the results.

<Comparative Example 1>

An SPR sensor cell and an SPR sensor were produced in the same way as in Example 1 except for not forming a protective layer. The SPR sensor thus obtained was evaluated in the same way as in Example 1. Table 1 shows the results.

<Comparative Example 2>

An SPR sensor cell and an SPR sensor were produced in the same way as in Example 1 except for forming an $SiO_2$ layer (thickness: 20 nm) as the protective layer. The SPR sensor thus obtained was evaluated in the same way as in Example 1. Table 1 shows the results.

<Comparative Example 3>

An SPR sensor cell and an SPR sensor were produced in the same way as in Example 6 except for forming an $SiO_2$ layer (thickness: 20 nm) as the protective layer. The SPR sensor thus obtained was evaluated in the same way as in Example 1. Table 1 shows the results.

<Comparative Example 4>

An SPR sensor cell and an SPR sensor were produced in the same way as in Example 1 except for forming a Cr layer (thickness: 20 nm) as the protective layer. The SPR sensor thus obtained was evaluated in the same way as in Example 1. Table 1 shows the results.

<Comparative Example 5>

An SPR sensor cell and an SPR sensor were produced in the same way as in Example 6 except for forming a Cr layer (thickness: 20 nm) as the protective layer. The SPR sensor thus obtained was evaluated in the same way as in Example 1. Table 1 shows the results.

<Comparative Example 6>

An SPR sensor cell and an SPR sensor were produced in the same way as in Example 1 except for forming a GaSb layer (thickness: 20 nm) as the protective layer. The SPR sensor thus obtained was evaluated in the same way as in Example 1. Table 1 shows the results.

<Comparative Example 7>

An SPR sensor cell and an SPR sensor were produced in the same way as in Example 6 except for forming a GaSb layer (thickness: 20 nm) as the protective layer. The SPR sensor thus obtained was evaluated in the same way as in Example 1. Table 1 shows the results.

[Table 1]

| | Protective layer | | | | | Gradient | Amount of change in transmittance (%) |
|---|---|---|---|---|---|---|---|
| | Forming material | Band gap (eV) | Refractive index [1] | Extinction coefficient[2] | Pattern[3] | | |
| Example 1 | Si | 1.1 | 4.1 | $1.1\times10^{-2}$ | A | 15,660 | 0 |
| Example 2 | ZnSe | 2.7 | 2.5 | 0 | A | 9,440 | 0 |
| Example 3 | NPD | 3.0 | 1.8 | 0 | A | 7,379 | 0 |
| Example 4 | GaAs | 3.3 | 3.4 | 0 | A | 12,222 | 0 |
| Example 5 | AlN | 6.3 | 2.1 | 0 | A | 8,002 | 0 |
| Example 6 | Si | 1.1 | 4.1 | $1.1\times10^{-2}$ | B | 14,343 | 51 |
| Example 7 | ZnSe | 2.7 | 2.5 | 0 | B | 9,123 | 49 |
| Example 8 | NPD | 3.0 | 1.8 | 0 | B | 7,245 | 50 |
| Example 9 | GaAs | 3.3 | 3.4 | 0 | B | 10,203 | 50 |
| Example 10 | AlN | 6.3 | 2.1 | 0 | B | 7,425 | 50 |
| Comparative Example 1 | - | - | - | - | - | 5,826 | 50 |
| Comparative Example 2 | $SiO_2$ | 7.9 | 1.5 | 0 | A | 5,311 | 0 |
| Comparative Example 3 | $SiO_2$ | 7.9 | 1.5 | 0 | B | 5,127 | 50 |
| Comparative Example 4 | Cr | 0 | 4.2 | 4.15 | A | - | 0 |
| Comparative Example 5 | Cr | 0 | 4.2 | 4.15 | B | - | 48 |
| Comparative Example 6 | GaSb | 0.6 | 4.1 | $2.9\times10^{-1}$ | A | - | - |

(continued)

| | Protective layer | | | | | Gradient | Amount of change in transmittance (%) |
|---|---|---|---|---|---|---|---|
| | Forming material | Band gap (eV) | Refractive index *1 | Extinction coefficient*2 | Pattern*3 | | |
| Comparative Example 7 | GaSb | 0.6 | 4.1 | $2.9 \times 10^{-1}$ | B | - | - |

*1: The refractive index was measured at a wavelength of 850 nm.
*2: The extinction coefficient was measured by forming a thin film having a thickness of 100 nm on a glass substrate, and calculating a value at a wavelength of 1,200 nm by spectroscopic ellipsometry.
*3: In the case of "A", a protective layer was formed on the entirety of the upper surface of each of the core layer and the under-cladding layer, and in the case of "B", a protective layer having the same pattern as the metal layer was formed.

<Evaluation>

As apparent from Table 1, according to measurement using any of the SPR sensor cells of the Examples, the gradient is extremely large as compared to the SPR sensor cell in which no protective layer is formed (Comparative Example 1) and the SPR sensor cells each using a material having a band gap of 7.9 eV as the material for forming the protective layer (Comparative Examples 2 and 3), revealing that the SPR sensor cells of the Examples are excellent in detection sensitivity. On the other hand, in the case of any of the SPR sensor cells each using a metal as the material for forming the protective layer (Comparative Examples 4 and 5) and the SPR sensor sells each using a material having a band gap of 0.6 eV as the material for forming the protective layer (Comparative Examples 6 and 7), no detection of SPR was observed. In addition, in the case of any of the SPR sensor cells in each of which the protective layer is formed so as to cover the entirety of the upper surface of each of the under-cladding layer and the core layer (pattern A: Examples 1 to 5), the amount of change in transmittance is found to be small as compared to the SPR sensor cells in each of which the protective layer is formed on only a part covered with the metal layer (pattern B: Examples 6 to 10). This is presumably because in each of the SPR sensor cells of the pattern B, the polymer for forming the under-cladding layer swelled with the sample within 10 minutes from the loading of the sample.

Industrial Applicability

The SPR sensor cell and SPR sensor of the present invention can be used suitably in various chemical analyses and biochemical analyses such as the measurement of a sample concentration and the detection of an immunoreaction.

Reference Signs List

| 10 | detection unit |
|---|---|
| 11 | under-cladding layer |
| 12 | core layer |
| 13 | metal layer |
| 14 | protective layer |
| 15 | over-cladding layer |
| 20 | sample mounting portion |
| 100 | SPR sensor cell |
| 110 | light source |
| 120 | optical measuring instrument |
| 200 | SPR sensor |

**Claims**

**1.**   An SPR sensor cell, comprising:

a detection unit; and
a sample mounting portion adjacent to the detection unit,
wherein:

the detection unit includes an under-cladding layer, a core layer formed so that at least a part of the core layer is adjacent to the under-cladding layer, a metal layer covering the core layer, and a protective layer formed between the core layer and the metal layer; and
the protective layer is formed of a material having a band gap (Eg) of more than 1.0 eV and less than 7.0 eV.

2. The SPR sensor cell according to claim 1, wherein a refractive index of the protective layer is higher than a refractive index of the core layer.

3. The SPR sensor cell according to claim 1 or 2, wherein the material for forming the protective layer comprises at least one member selected from silicon, zinc selenide, gallium arsenide, aluminum nitride,and N,N'-di(1-naphthyl)-N,N'-diphenylbenzidine.

4. The SPR sensor cell according to any one of claims 1 to 3, wherein the refractive index of the protective layer is 1.60 or more.

5. The SPR sensor cell according to any one of claims 1 to 4, wherein the protective layer has an extinction coefficient of $1.80 \times 10^{-2}$ or less.

6. The SPR sensor cell according to any one of claims 1 to 5, wherein the protective layer has a thickness of from 5 nm to 200 nm.

7. The SPR sensor cell according to any one of claims 1 to 6, wherein:

the core layer is buried in the under-cladding layer so that an upper surface of the core layer is exposed; and
the protective layer is formed so as to cover a part of each of an upper surface of the under-cladding layer and the upper surface of the core layer, the part being adjacent to the sample mounting portion.

8. An SPR sensor, comprising the SPR sensor cell according to any one of claims 1 to 7.

Fig.1

(a)

(b)

Fig.2

(a)

100b

20

B

14  13  B

15

B

12

10

11

100b

(b)

20

15  14  13

15

11

12

10

Fig.3

(a)

11'
31

(e)

12
11

(b)

11

(f)

12
14
11

(c)

12'
11

(g)

13
14
11
12

(d)

12'
UV IRRADIATION
11

(h)

13
20
15
13
14
11
10
12

Fig.4

## INTERNATIONAL SEARCH REPORT

| International application No. |
| --- |
| PCT/JP2013/054909 |

A. CLASSIFICATION OF SUBJECT MATTER
*G01N21/27*(2006.01)i, *G01N21/03*(2006.01)i

According to International Patent Classification (IPC) or to both national classification and IPC

B. FIELDS SEARCHED

Minimum documentation searched (classification system followed by classification symbols)
G01N21/00-21/74

Documentation searched other than minimum documentation to the extent that such documents are included in the fields searched
    Jitsuyo Shinan Koho       1922-1996    Jitsuyo Shinan Toroku Koho   1996-2013
    Kokai Jitsuyo Shinan Koho  1971-2013    Toroku Jitsuyo Shinan Koho   1994-2013

Electronic data base consulted during the international search (name of data base and, where practicable, search terms used)
    JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
| --- | --- | --- |
| Y | WO 2011/066097 A1 (CORNING INC.), 03 June 2011 (03.06.2011), paragraphs [0054] to [0062], [0065], [0078] to [0084]; fig. 4 & US 2011/0128546 A1    & US 2011/0171746 A1 & EP 2507659 A       & CN 102640024 A | 1-8 |
| Y | JP 2000-019100 A (Suzuki Motor Corp.), 21 January 2000 (21.01.2000), paragraphs [0026] to [0033]; fig. 1 to 6 & US 6432364 B1      & EP 971226 A1 | 1-8 |
| Y | JP 2009-085714 A (National Institute of Advanced Industrial Science and Technology), 23 April 2009 (23.04.2009), paragraph [0018] & WO 2009/041195 A1 | 2,4,5 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 May, 2013 (22.05.13) | 04 June, 2013 (04.06.13) |

| Name and mailing address of the ISA/ | Authorized officer |
| --- | --- |
|    Japanese Patent Office | |
| Facsimile No. | Telephone No. |

Form PCT/ISA/210 (second sheet) (July 2009)

**INTERNATIONAL SEARCH REPORT**

International application No.

PCT/JP2013/054909

C (Continuation).   DOCUMENTS CONSIDERED TO BE RELEVANT

| Category* | Citation of document, with indication, where appropriate, of the relevant passages | Relevant to claim No. |
|---|---|---|
| Y | Daboo C , et.al., SURFACE-PLASMON-ENHANCED PHOTODETECTTION IN PLANAR Au-GaAs SCHOTTKY JUNCTIONS, Thin Solid Films, 1990.08.01, Vol.189, No.1, pp.27-38 | 1-4,7,8 |

Form PCT/ISA/210 (continuation of second sheet) (July 2009)

**EP 2 821 776 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000019100 A

- JP 9281351 A